# EUROPÄISCHE PATENTANMELDUNG

(11) **EP 3 567 702 A1**
(43) Veröffentlichungstag der Anmeldung: **13.11.2019**
(21) Anmeldenummer: 18171476.7
(22) Anmeldetag: 09.05.2018
(51) Int. Cl.: H02K 3/493

(54) **ELEKTRISCHE MASCHINE**

(71) Anmelder: Siemens Aktiengesellschaft, 80333 München (DE)
(72) Erfinder: Hoffmann, Andreas, 91077 Neunkirchen am Brand (DE)

(57) **Zusammenfassung**

Elektrische Maschine mit einem Rotor und einem Stator (10) und mit einer oder mehreren Nuten (12) in einer dem Luftspalt (15) zugewandten Oberfläche von Rotor und/oder Stator (10), wobei ein oder mehrere elektrische Leiter (11) in die Nut (12) eingelegt sind und wobei die Nut (12) wenigstens in einem Teilbereich ihrer Länge zum Luftspalt (15) hin durch ein einen Nutverschluss (14, 30, 40, 50, 60, 70) bildendes Material verschlossen ist, wobei das Material Partikel eines magnetischen Fluss leitenden Materials in einem mechanisch stabilisierenden Trägermaterial aufweist, dadurch gekennzeichnet, dass das Material in Nutquerrichtung nebeneinander einen ersten Teilbereich (31) mit einer ersten Partikelkonzentration und einen zweiten Teilbereich (32) mit einer gegenüber der ersten Partikelkonzentration verringerten zweiten Partikelkonzentration aufweist.

## Beschreibung

Die Erfindung betrifft eine elektrische Maschine gemäß dem Oberbegriff von Anspruch 1 sowie ein Herstellungsverfahren für eine elektrische Maschine gemäß dem Oberbegriff von Anspruch 7.

Bei elektrischen Maschinen wird Elektroblech zur Führung des magnetischen Flusses eingesetzt. Um die magnetische Flussdichte gering zu halten, wird die Fläche des Elektrobleches in flussführender Richtung möglichst groß ausgelegt. Der magnetische Fluss wird beim Übergang vom Stator zum Rotor entlang der Zähne durch Nuten eingeengt. Aus diesem Grund werden die Zahnköpfe zum Luftspalt hin oft verbreitert und die Nutschlitzbreite möglichst klein gehalten. Bei Runddrahtwicklungen ist der Zahn zum Luftspalt hin meist fast geschlossen und nur eine kleine Öffnung zum Einführen der Drähte ist frei gelassen.

Der obere Bereich wird nach dem Einträufeln der Wicklung mit einem Isoliermaterial gefüllt. Bei Hochspannungswicklungen mit Rechteckleitern sowie bei Zahnspulenwicklungen mit Formspulen ist eine Vergrößerung des Zahnkopfes nahe am Luftspalt - montagebedingt - oft nicht möglich. Die Wicklung wird in diesem Fall mechanisch von einem Nutverschlusskeil gehalten. Große Nutschlitzbreiten verursachen neben einer schlechten magnetischen Flussführung im Luftspalt große Flussschwankungen und somit zusätzliche Verluste. Es besteht daher die Bestrebung, den Nutschlitz möglichst klein auszuführen, wobei dies bei Rechteckleitern oder Formspulen oft nur schwer möglich ist.

Um die Nutschlitzbreite und somit den Magnetisierungsstrombedarf sowie Verluste zu minimieren, können insbesondere bei offenen Nuten (Hochspannungswicklungen oder Zahnspulen) magnetische Nutverschlusskeile verwendet werden. Der magnetische Nutverschlusskeil wird nach der Montage der Wicklung auf die Nut aufgebracht und härtet dort aus. Er besteht aus einem Eisen/Harzgemisch, dessen relative Permeabilität typischerweise zwischen 2 und 10 beträgt und leitet somit den magnetischen Fluss deutlich besser als Luft oder ein anderes unmagnetisches Material. Das Material führt also den magnetischen Fluss in Richtung des Luftspaltes besser als Luft. Der magnetische Fluss wird aber auch in den anderen Richtungen, also in Nut-Längsrichtung und in Nut-Querrichtung besser geführt. Dadurch können in nachteiliger Weise vermehrt Streuflüsse quer zur Nut auftreten. Ist die Flussführung zu gut, beispielsweise wenn die Permeabilität größer als 10 ist oder wenn die Nutquerfläche zu groß ist, werden die positiven Eigenschaften durch die negativen (vergrößerte Nutstreuung) kompensiert.

Es ist Aufgabe der vorliegenden Erfindung, eine verbesserte elektrische Maschine anzugeben, bei der insbesondere ein Nutverschluss mit verbesserten Eigenschaften erreicht ist. Eine weitere Aufgabe besteht darin, ein Herstellungsverfahren für eine solche elektrische Maschine anzugeben.

Diese Aufgabe wird gelöst durch eine elektrische Maschine mit den Merkmalen von Anspruch 1. Hinsichtlich des Verfahrens wird die Aufgabe durch ein Verfahren mit den Merkmalen von Anspruch 7 gelöst.

Die erfindungsgemäße elektrische Maschine umfasst einen Rotor und einen Stator. In üblicher Weise umschließt dabei der Rotor den Stator oder umgekehrt, wobei zwischen Rotor und Stator ein Luftspalt verbleibt.

In einer dem Luftspalt zugewandten Oberfläche von Rotor und/oder Stator weist die Oberfläche eine oder mehrere Nuten auf. In die Nut oder Nuten sind ein oder mehrere elektrische Leiter eingelegt. Zum Luftspalt hin ist die Nut wenigstens in einem Teilbereich ihrer Länge durch ein Material verschlossen. Das Material weist Partikel eines magnetischen Fluss leitenden Materials in einem mechanisch stabilisierenden Trägermaterial auf.

Das Material weist dabei in Nutquerrichtung nebeneinander einen ersten Teilbereich mit einer ersten Partikelkonzentration und einen zweiten Teilbereich mit einer gegenüber der ersten Partikelkonzentration verringerten zweiten Partikelkonzentration auf.

Bei dem erfindungsgemäßen Verfahren zur Herstellung einer elektrischen Maschine wird ein elektrischer Leiter in eine Nut in der Oberfläche von Stator und/oder Rotor eingebracht und ein Nutverschluss mit einem generatives Herstellungsverfahren aufgebracht. Dabei wird mit dem generativen Herstellungsverfahren ein Material erzeugt, das ein mechanisch stabilisierendes Trägermaterial und Partikel eines magnetischen Fluss leitenden Materials aufweist.

Die Partikel werden inhomogen verteilt, indem in Nutquerrichtung nebeneinander ein erster Teilbereich mit einer ersten Partikelkonzentration und ein zweiter Teilbereich mit einer gegenüber der ersten Partikelkonzentration verringerten zweiten Partikelkonzentration erstellt wird.

Die Nuten in elektrischen Maschinen sind typischerweise geradlinig oder näherungsweise geradlinig. Weiterhin sind die Nuten typischerweise wesentlich länger, als sie breit sind. Die Richtung, entlang derer sich die Nut erstreckt, wird hier als Nutlängsrichtung bezeichnet. Sie entspricht üblicherweise der axialen Richtung der elektrischen Maschine, wobei die Nuten auch absichtlich gegenüber der axialen Richtung verkippt sein können. Die azimutale Richtung senkrecht zur Nutlängsrichtung wird als Nutquerrichtung bezeichnet. Azimutal bedeutet dabei entlang des Umfangs. Mit anderen Worten bezeichnet die Nutquerrichtung eine Richtung parallel zur dem Luftspalt zugewandten Oberfläche von Stator oder Rotor, aber senkrecht zur axialen Richtung der elektrischen Maschine. Die entsprechende Oberfläche von Stator oder Rotor ist gekrümmt, da sie eine Zylindermantelfläche ist, kann aber lokal im Bereich einer einzelnen Nut als näherungsweise eben angesehen werden. Die Richtung zum Luftspalt hin bezeichnet die Richtung senkrecht zur Oberfläche von Stator oder Rotor, d.h. eine radiale Richtung der Maschine.

Das generative Herstellungsverfahren wird üblicherweise als 3D-Druck bezeichnet. 3D-Druck zeichnet sich dadurch aus, dass das erstellte Material in kleinen Elementen aufgebracht wird, wobei diese Elemente nach Aufbringung ihren Ort nicht mehr oder nur noch unwesentlich ändern. Mit anderen Worten bleibt das gedruckte Objekt in seiner gedruckten dreidimensionalen Struktur erhalten. Beispielsweise durch die Verwendung zweier Druckköpfe können Gemische verschiedener Materialien erstellt werden. Deren genaue Mischung bleibt ebenfalls lokal erhalten, man ist also herstellungsbedingt nicht auf ein festes Mischverhältnis eingeschränkt, sondern kann dieses lokal einstellen, wobei die Granularität für die meisten Anwendungen sehr fein ist. Verwendet werden können beispielsweise Schmelzschichtverfahren oder Jetting-Verfahren.

Für die Erfindung wurde erkannt, dass genau die Einstellbarkeit der Materialmischung verwendet werden kann, den eingangs beschriebenen Zielkonflikt zwischen dem Erreichen einer guten Führung des magnetischen Flusses zum Luftspalt hin und dem Vermeiden von Flüssen in Nutquerrichtung zu vermindern. Dazu wird der Nutverschluss so gestaltet, dass er in Nutquerrichtung nebeneinander liegend Bereiche verschiedener Permeabilität aufweist. Beispielsweise kann ein Bereich geringer Permeabilität in der Nutmitte verlaufen, während zur Seite dieses Bereichs je ein Bereich höherer Permabilität verläuft. Dadurch wird für den magnetischen Fluss zum Luftspalt hin ein erheblicher Teil der Nutbreite oder Nutschlitzbreite zu einem guten magnetischen Leiter, während für Querflüsse eine Flussbarierre entsteht. Mit anderen Worten wird durch diesen Nutverschluss auch bei sehr breiten Nutschlitzen eine Situation geschaffen, die einem vorteilhaften schmalen Nutschlitz ähnelt.

Vorteilhafte Ausgestaltungen der erfindungsgemäßen Maschine und des erfindungsgemäßen Verfahrens gehen aus den abhängigen Ansprüchen hervor. Dabei kann die Ausführungsform nach Anspruch 1 oder Anspruch 7 mit den Merkmalen eines der Unteransprüche oder vorzugsweise auch mit denen aus mehreren Unteransprüchen kombiniert werden. Demgemäß können noch zusätzlich folgende Merkmale vorgesehen sein:
- Als Trägermaterial kann ein Harz oder ein Kunststoff verwendet werden. Harz sind für diese Anwendung bekannt und weisen eine geeignete Isolierfähigkeit und mechanische Stabilität auf.
- Die Partikel können Eisen oder eine Eisenlegierung umfassen, insbesondere aus Eisen oder der Eisenlegierung bestehen.
- Die Partikel können so im Trägermaterial angeordnet sein und eine derartige Dichte aufweisen, dass sie vom Trägermaterial weitgehend gegeneinander isoliert werden. Dadurch wird die Ausbildung von Wirbelströmen vermieden.
- Der zweite Teilbereich des Materials kann sich in Nutlängsrichtung und Luftspaltrichtung durch das Material erstrecken. Dadurch wird im gesamten Nutverschluss vorteilhaft eine Flussbarriere erstellt.
- Der zweite Teilbereich kann frei von den Partikeln sein. Dadurch wird die Herstellung vereinfacht.
- Der zweite Teilbereich kann gegenüber der Nutlängsrichtung gekippt angeordnet sein. Insbesondere kann der zweite Teilbereich zwischen einer Querbegrenzungsfläche an einem Längsende und der anderen Querbegrenzungsfläche am anderen Längsende der Nut verlaufen. Hierdurch überlagern sich entstehende Oberwellen destruktiv, d.h. sie heben sich gegenseitig auf.
- Die Breite des zweiten Teilbereichs kann in der Richtung vom Luftspalt in die Nut hinein zunehmen. Hierdurch wird vorteilhaft die Flussbarriere für Querflüsse verstärkt, während die Änderung der magnetischen Eigenschaft des Materials für magnetischen Fluss in Luftspaltrichtung nur gering ist.
- Das Material kann in Luftspaltrichtung einen Gradienten der Partikelkonzentration aufweisen, wobei insbesondere die Partikelkonzentration in Richtung vom Luftspalt in die Nut hinein abnimmt. Hierdurch wird analog zur Änderung der Breite des zweiten Teilbereichs die Flussbarriere für Querflüsse verstärkt, während die Änderung der magnetischen Eigenschaft des Materials für magnetischen Fluss in Luftspaltrichtung nur gering ist.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen:
Figuren 1 und 2 Ausführungen von Nuten ohne Nutverschluss und mit homogenem Nutverschluss,
Figur 3 eine Ausführung einer Nut mit einem Nutverschluss mit Flussbarriere,
Figur 4 eine Draufsicht auf wie Nuten mit schräger Ausführung der Flussbarriere,
Figur 5 und 6 weitere Ausführungen von Nuten mit einem Nutverschluss mit Flussbarrieren.

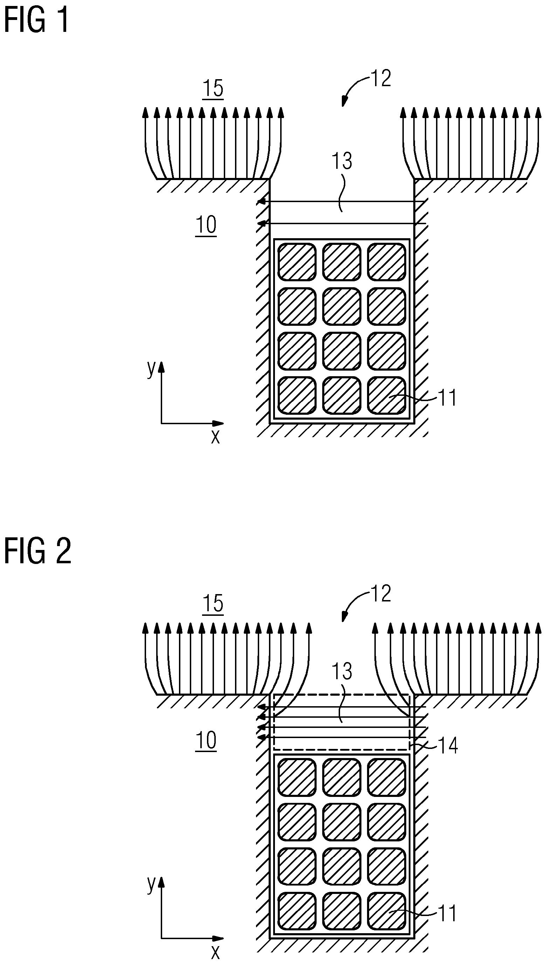

Fig. 1 zeigt einen Querschnitt durch die Oberfläche eines Stators 10 oder Rotors 10 im Bereich einer Nut 12. Oberhalb der Oberfläche, d.h. in Luftspaltrichtung y, folgt der Luftspalt, der Rotor und Stator 10 trennt. Die Krümmung der Oberfläche, die bei zylinderförmigem Stator oder Rotor normalerweise vorhanden ist, ist nicht gezeigt. Ebenso ist der jeweils andere, sich an den Luftspalt anschließende Teil der elektrischen Maschine, d.h. der Rotor 10 für den Stator 10 und umgekehrt, nicht dargestellt.

In die Nut 12 eingelegt ist ein Paket aus vier mal drei Rechteckleitern 11, die den Zahnkopf-Bereich 13 offenlassen. Der Zahnkopf-Bereich 13 ist nicht weiter verschlossen oder angefüllt mit Material und enthält daher nur Luft. Pfeile in Figur 1 deuten die Richtung und Intensität des magnetischen Flussverlaufs an. Der magnetische Quer-Flussverlauf, d.h. Flussverlauf in x-Richtung im Zahnkopf-Bereich 13 ist durch die Luft im Zahnkopf-Bereich 13 schwach im Vergleich zum Flussverlauf in der Luftspaltrichtung, d.h. oberhalb der Oberfläche von Stator oder Rotor 10. Im Ausgleich dafür ist aber ein magnetischer Fluss in Luftspaltrichtung, also in y-Richtung, direkt oberhalb des Zahnkopf-Bereichs 13 praktisch nicht vorhanden. Der Nutschlitz, also die Nutöffnung wirkt in fast ihrer vollen Breite in x-Richtung als Aussparung auf den magnetischen Fluss in Luftspaltrichtung.

Fig. 2 zeigt einen Querschnitt durch die Oberfläche eines Stators 10 oder Rotors 10 im Bereich einer Nut 12, bei der der Zahnkopf-Bereich 13 ausgefüllt ist mit einem Nutverschluss 14 aus einem homogenen Material mit einer Permeabilität, die gegenüber Luft erhöht ist. Ansonsten entspricht der in Figur 2 gezeigte Aufbau dem der Figur 1.

Analog zu Figur 1 deuten die Pfeile in Figur 2 die Richtung und Intensität des magnetischen Flussverlaufs an. Der magnetische Quer-Flussverlauf, d.h. Flussverlauf in x-Richtung im Zahnkopf-Bereich 13 ist durch den Nutverschluss 14 deutlich stärker als bei der Nut nach Figur 1. Im Ausgleich dafür ist aber nun auch ein magnetischer Fluss in Luftspaltrichtung, also in y-Richtung, direkt oberhalb des Zahnkopf-Bereichs 13 vorhanden. Die Nutöffnung wirkt also bei dem Aufbau nach Fig. 2 auch als Aussparung auf den magnetischen Fluss in Luftspaltrichtung, aber mit einer scheinbaren Breite, die geringer ist als die tatsächliche Breite der Nut.

Da der magnetische Fluss in Luftspaltrichtung erwünscht ist, der magnetische Quer-Fluss aber nicht, muss für die Gestaltung der elektrischen Maschine ein Kompromiss gefunden werden.

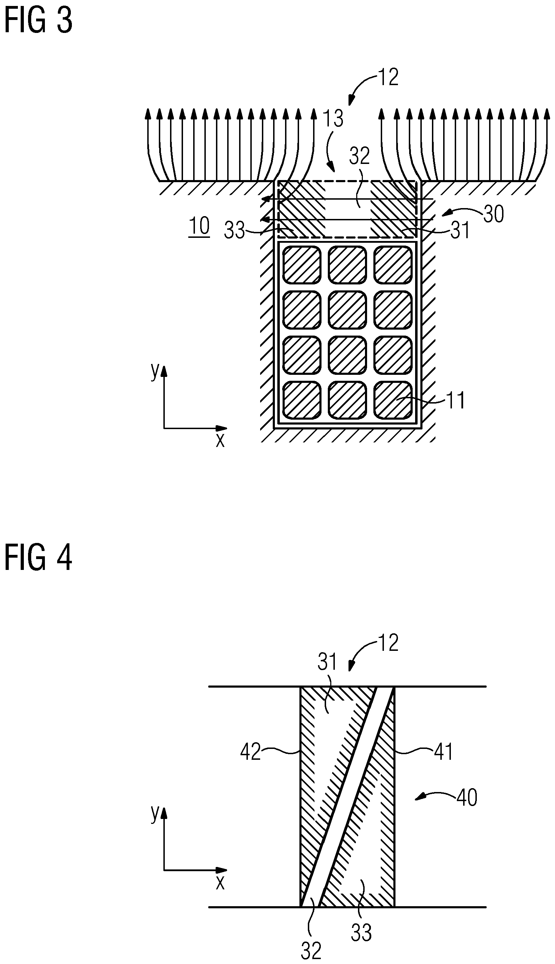

Fig. 3 zeigt ein erstes Ausführungsbeispiel für die Erfindung. Fig. 3 zeigt wiederum einen Querschnitt durch eine Nut 12. Bei dieser Nut ist der Zahnkopf-Bereich 13 ausgefüllt mit einem Nutverschluss 30. Der Nutverschluss 30 besteht aus Partikeln einer Eisenlegierung, die in einer Harzmatrix angeordnet sind. Dabei ist die Häufigkeit oder Dichte der Eisenpartikel gekoppelt mit der Permeabilität des Materials. Der Nutverschluss 30 weist in Nutquerrichtung, d.h. in x-Richtung, drei Bereiche 31, 32, 33 auf. Dabei umgeben der erste und dritte Bereich 31, 33 den mittig liegenden zweiten Bereich 32. Der zweite Bereich 32 weist eine im Vergleich zu dem ersten und dritten Bereich 31, 33 verringerte Partikeldichte auf.

Der Nutverschluss 30 wird mit einem generativen Verfahren (additive manufacturing), d.h. 3D-Druck hergestellt. Dabei können abhängig vom verwendeten Verfahren beispielsweise zwei verschiedene Druckköpfe verwendet werden, um die Partikel und das umgebende und mechanisch stabilisierende Harz aufzutragen. Die Der Nutverschluss 30 wird dabei in situ in der Nut erzeugt und aufgetragen.

Analog zu den vorherigen Figuren deuten die Pfeile in Figur 3 die Richtung und Intensität des magnetischen Flussverlaufs an. Der magnetische Quer-Flussverlauf, d.h. Flussverlauf in x-Richtung im Zahnkopf-Bereich 13 ist durch den Nutverschluss 30 deutlich schwächer als bei der Nut nach Figur 2. Der Grund dafür ist die durch den zweiten Bereich 32 geschaffene Flussbarriere im Nutverschluss 30. Der magnetische Fluss in Luftspaltrichtung direkt oberhalb des Zahnkopf-Bereichs 13 ist aber qualitativ vergeichbar mit dem bei der Nut nach Figur 2. Der Grund hierfür liegt im ersten und dritten Bereich 31, 33 des Nutverschlusses 30, die durch die Partikel eine Ausbildung des magnetischen Flusses in Luftspaltrichtung erlauben. Die Nutöffnung wirkt also bei dem Aufbau nach Fig. 3 als vorteilhafte Kombination der Effekte der Nuten 12 aus Fig. 1 und 2, indem der Nutverschluss wie eine breite Aussparung auf Quer-Flüsse, aber nur wie eine schmale Aussparung auf den magnetischen Fluss in Luftspaltrichtung wirkt.

Um Statornutungsoberwellen zu minimieren, werden Rotorstäbe bei einer Asynchronmaschine oder Magnete bei einer Synchronmaschine oft geschrägt ausgeführt. Eine axiale Verschiebung der Flussbarriere hat einen ähnlichen Effekt und führt zusätzlich zu einer Verringerung der Nutungsoberwellen im Luftspaltfluss. Figur 4 zeigt eine Draufsicht auf eine Nut 12 mit einem entsprechend gestalteten Nutverschluss 40. Der Nutverschluss 40 weist dabei wie auch der Nutverschluss 30 einen ersten bis dritten Bereich 31, 32, 33 auf, wobei der zweite Bereich durch eine geringere Konzentration von Partikeln als Flussbarriere wirkt. Der zweite Bereich 32 von Nutverschluss 40 erstreckt sich nun aber im Gegensatz zu dem Ausführungsbeispiel der Figur 3 nicht parallel zu den Nutquerbegrenzungen 41, 42, sondern ist gegenüber diesen gekippt. Dadurch beginnt der zweite Bereich 32 an einem Längsende der Nut 12 an einer der Nutquerbegrenzungen 41, 42 und endet am anderen Längsende der Nut 12 an der anderen der Nutquerbegrenzungen 41, 42. Der erste und dritte Bereich 31, 33 werden dadurch in der Draufsicht dreieckförmig, also in der Gesamtheit keilförmig.

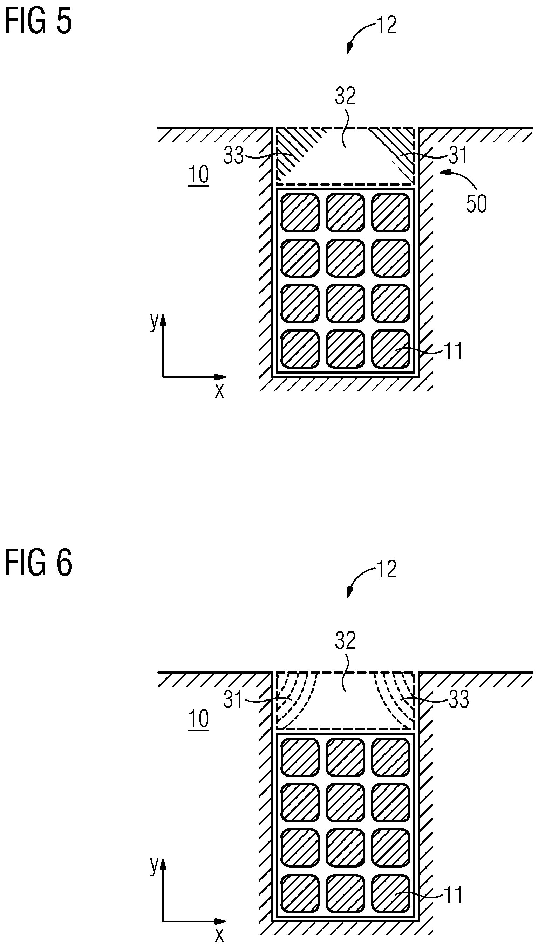

Ein weiteres Ausführungsbeispiel für die Erfindung ist in Figur 5 gezeigt. Die Ausführung der Nut 12 und des Nutverschlusses 50 entspricht dabei der Ausführung der Nut 12 und des Nutverschlusses 30 in Figur 3. Im Unterschied zum Nutverschluss 30 der Figur 3 verbreitert sich jedoch der zweite Bereich 32 in Richtung vom Luftspalt zum elektrischen Leiter 11, so dass der erste und dritte Bereich 31, 33 nun im Querschnitt eine Dreiecksform oder eine Trapezform annehmen. Diese Formgebung lehnt sich an der Form des magnetischen Flusses an im Nutverschluss. Sich ausbildender Fluss in der Luftspaltrichtung wird durch den zweiten Bereich nur wenig eingeschränkt, während gleichzeitig die Wirkung als Flussbarriere für Querflüsse durch die Verbreiterung gesteigert wird.

Die Ausführung des Nutverschlusses 50 gemäß Figur 5 kann auch dahingehend verändert werden, dass die Form der Bereich verändert wird, beispielsweise indem die Trennfläche zwischen den Bereichen 31, 32, 33 nicht geradlinig gewählt wird, sondern gekrümmt. Beispielsweise kann die Änderung der Breite des zweiten Bereichs 32 zum Leiter hin zunehmen, sodass der erste und dritte Bereich 31, 33 zum Luftspalt hin breiter sind als in Figur 5 gezeigt und der Querschnitt beispielsweise eher einem Kreissektor entspricht als einem Dreieck.

Weiterhin ist es auch möglich, statt Bereichen 31, 32, 33 mit fester Partikelkonzentration zu verwenden, die Partikelkonzentration kontinuierlich zu variieren. So kann beispielsweise in der vorgenannten Ausgestaltung mit kreissektorartigen Bereichen 31, 33 innerhalb der Bereiche 31, 33 ein für die Flussführung vorteilhafter Verlauf der Partikelkonzentration gewählt werden, beispielsweise indem kanalähnliche Strukturen geschaffen werden. Fig. 6 zeigt eine solche Gestaltung des Nutverschlusses 60. Dabei ist die Partikelkonzentration zwischen den angedeuteten Kanalstrukturen nicht konstant, sondern variiert in kontinuierlicher Weise. Die kanalartigen Strukturen der Fig. 6 deuten lediglich Bereiche maximaler Partikelkonzentration an.

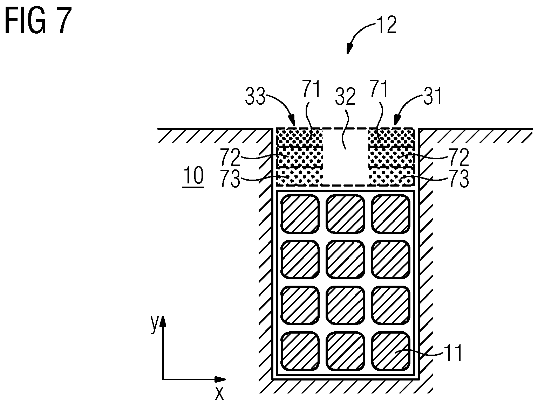

Eine weitere Möglichkeit, verschiedene Konzentration der Partikel zu verwenden, ist in Figur 7 dargestellt. Der Nutverschluss 70 der Figur 7 ist in etwa so gestaltet wie der Nutverschluss 30 der Figur 3. Im Gegensatz zum Nutverschluss 30 nimmt jedoch die Partikelkonzentration vom Luftspalt weg ab. Figur 7 zeigt, dass die Bereiche 31, 33 unterteilt sind in jeweils drei Zonen 71, 72, 73 mit verschiedener Partikelkonzentration. Anstelle konkreter Zonen 71, 72, 73 könnte der Konzentrationsverlauf der Partikel auch kontinuierlich gestaltet werden. Ähnlich zu den Ausführungsbeispielen der Fig. 5 und 6 bewirkt der Konzentrationsverlauf eine vorteilhafte niedrige Permabilität für Querflüsse bei gleichzeitig gutem Verhalten bzgl. von magnetischen Fluss zum Luftspalt hin.

Die Figuren zeigen durchgehen Nuten 12, bei denen die Öffnung zum Luftspalt hin keinerlei Verengung (Nutschlitz) aufweist. Es versteht sich, dass die gezeigten Ausführungsbeispiele auch solche Nuten anwendbar sind, bei denen eine verengte Öffnung zum Luftspalt hin vorliegt.

### Bezugszeichenliste

- 10: Stator, Rotor Elektroblech
- 12: Nut
- 11: Leiter
- 13: Zahnkopf-Bereich
- 14: magnetischer Nutverschluss
- 15: Luftspalt
- 31: Bereich erhöhter Partikeldichte
- 32: Bereich geringer Partikeldichte
- 30, 40, 50, 60, 70: Nutverschluss

## Patentansprüche

1. Elektrische Maschine mit einem Rotor und einem Stator (10) und mit einer oder mehreren Nuten (12) in einer dem Luftspalt (15) zugewandten Oberfläche von Rotor und/oder Stator (10), wobei ein oder mehrere elektrische Leiter (11) in die Nut (12) eingelegt sind und wobei die Nut (12) wenigstens in einem Teilbereich ihrer Länge zum Luftspalt (15) hin durch ein einen Nutverschluss (14, 30, 40, 50, 60, 70) bildendes Material verschlossen ist, wobei das Material Partikel eines magnetischen Fluss leitenden Materials in einem mechanisch stabilisierenden Trägermaterial aufweist, **dadurch gekennzeichnet, dass** das Material in Nutquerrichtung nebeneinander einen ersten Teilbereich (31) mit einer ersten Partikelkonzentration und einen zweiten Teilbereich (32) mit einer gegenüber der ersten Partikelkonzentration verringerten zweiten Partikelkonzentration aufweist.

2. Elektrische Maschine nach Anspruch 1, bei der die Partikel magnetisch gut leitfähige Partikel sind, insbesondere mit oder aus Eisen, Nickel, Kobalt oder einer Legierung davon.

3. Elektrische Maschine nach Anspruch 1, bei der der zweite Teilbereich (32) frei von Partikeln ist.

4. Elektrische Maschine nach Anspruch 3, bei der der Bereich (32) gegenüber der Nutlängsrichtung gekippt angeordnet ist, insbesondere zwischen einer Querbegrenzungsfläche (41, 42) an einem Längsende und der anderen Querbegrenzungsfläche (41, 42) am anderen Längsende der Nut (12) verläuft.

5. Elektrische Maschine nach Anspruch 3, bei der die Breite des zweiten Teilbereichs (32) in der Richtung vom Luftspalt (15) in die Nut (12) hinein zunimmt.

6. Elektrische Maschine nach Anspruch 1, bei der das Material einen Gradienten der Partikelkonzentration in Luftspaltrichtung aufweist, wobei insbesondere die Partikelkonzentration in Richtung vom Luftspalt (15) in die Nut (12) hinein abnimmt.

7. Verfahren zur Herstellung einer elektrischen Maschine, bei dem
- ein elektrischer Leiter (11) in eine Nut (12) in der Oberfläche von Stator und/oder Rotor (10) eingebracht wird,
- ein Nutverschluss (14, 30, 40, 50, 60, 70) mit einem generativen Herstellungsverfahren aufgebracht wird, wobei mit dem generativen Verfahren ein Material erzeugt wird, das ein mechanisch stabilisierendes Trägermaterial und Partikel eines magnetischen Fluss leitenden Materials aufweist, wobei die Partikel inhomogen verteilt werden, indem nebeneinander ein erster Teilbereich (31) mit einer ersten Partikelkonzentration und ein zweiter Teilbereich (32) mit einer gegenüber der ersten Partikelkonzentration verringerten zweiten Partikelkonzentration erstellt wird.
